# EUROPEAN PATENT APPLICATION

(11) **EP 0 892 565 A2**
(43) Date of publication of application: **20.01.1999**
(21) Application number: 98112543.8
(22) Date of filing: 06.07.1998
(51) Int. Cl.: H04Q 1/00

(54) **Data transmission system including mechanism for correcting errors in a dialed number**

(30) Priority: 16.07.1997 US 896046
(71) Applicant: Siemens Business Communication Systems, Inc., Santa Clara, CA 95052 (US)
(72) Inventor: Beyda, William Joseph, Cupertino, CA 95104 (US); Shaffer, Shmuel, Palo Alto, CA 94301 (US)
(74) Representative: Allen, Derek

(57) **Abstract**

A data communication system (20) for transmitting data on a telecommunication link. The data transmission system includes a modem/digital signal processor (26) that is programmed to detect alert tones that precede an informational message indicating a problem with a placed call. Once the alert tones are detected, a speech recognition program converts the spoken informational message into one or more text strings which are analyzed for instructions on how the call should be handled.

## Description

### Field of the Invention

The present invention relates to data transmission systems in general, and in particular to computerized data transmission systems such as facsimile machines or modems.

### Background of the Invention

With advances in high speed data transmission techniques, systems for transmitting data via telecommunication links have become ubiquitous in the modem office environment. Data transmission systems such as facsimile machines or modems provide the ability to transmit data or documents around the world within minutes rather than the hours or days required to deliver them via conventional methods such as by courier or through the mail.

Most data transmission systems operate under the control of a computer processor without human supervision. For example, most facsimile machines can scan and store a plurality of documents in their internal memory and transmit them sequentially to a predetermined or specially entered telephone number. While this process generally word well, currently existing facsimile machines cannot recover from an error in the telephone number of the called party or receiving facsimile machine. Currently, the most common method of informing a user that a problem has occurred with the number dialed is to use an informational message that is played by the telephone service provider. Such messages are usually preceded with a series of "alert tones" that have a predefined frequency or pitch. For example, when a telephone number of a desired party or receiving machine has been changed, the informational message is usually something like: "The number you have reached has been changed. The new number is 555-1234. Please make a note." Despite the fact that an informative message is played by the telephone service provider, currently available data transmission systems will continue to dial the original number again and again before terminating with the error message indicating that a connection was not possible. If a human operator is not available to receive the error message, then there is a chance that the data to be transmitted will never reach the intended recipient.

Given the shortcomings in prior art computer-based data transmission systems, there is a need for a data transmission system that can detect and respond to the informational messages played by the telephone service provider in order to increase the speed and accuracy with which data is transmitted.

### Summary of the Invention

The present invention is a data communication system that can detect and interpret the informational messages indicating that there is a problem with the telephone number dialed. In one embodiment of the invention, a digital signal processor within the data transmission system is programmed to detect the alert tones that precede an informational message that indicates a problem with the telephone number that was dialed. After detecting the alert tones, the digital signal processor runs a voice recognition program that converts the audio informational message into text that is analyzed to determine what action should be taken. In the case of a changed telephone number, the digital signal processor parses the text of the informational message for the new telephone number and attempts to transmit the data using the new telephone number.

Although the present invention is primarily directed to computerized data transmission systems such as facsimile machines or modems, the present invention can also be used in other communication systems such as conventional or cellular telephones, where it is often difficult or inconvenient for a user to make a note of the error described in a informational message.

### Brief Description of the Drawings

The foregoing aspects and many of the attendant advantages of this invention will become more readily appreciated as the same becomes better understood by reference to the following detailed description, when taken in conjunction with the accompanying drawings, wherein:
FIGURE 1 is a block diagram of the data transmission system that operates according to the present invention; and
FIGURE 2 is a flowchart showing the operation of the data transmission system according to the present invention.

### Detailed Description of the Preferred Embodiment

As indicated above, the present invention is a data transmission system that can detect and interpret informational messages indicating that there is a problem with a dialed telephone number.

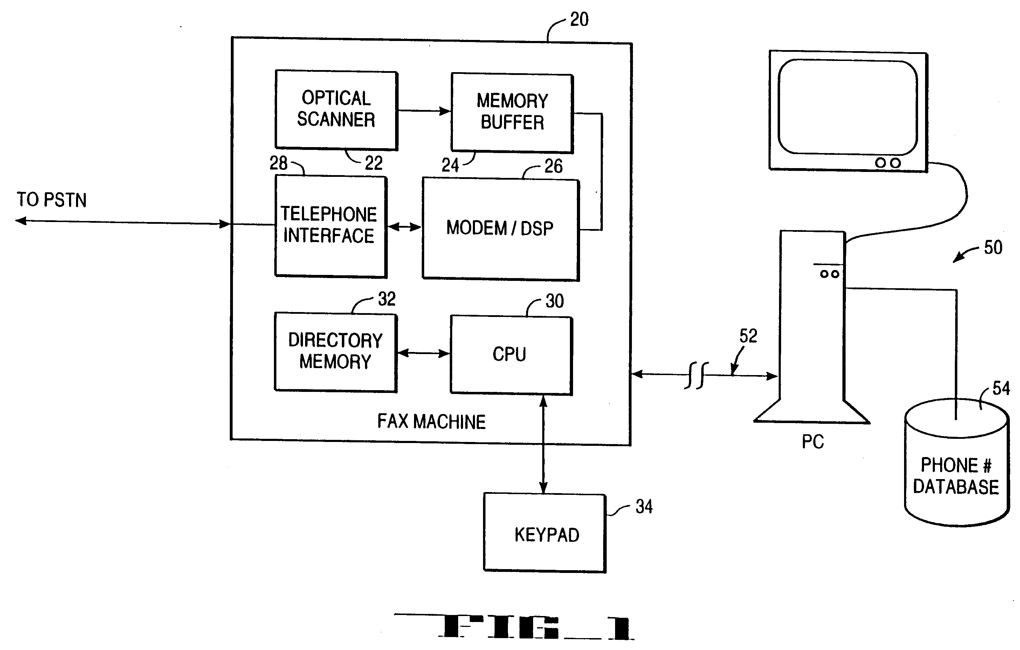

Turning now to FIGURE 1, a first embodiment of the present invention comprises a data transmission system such as a facsimile machine that is coupled to a public switched telephone network. The facsimile machine 20 includes an optical scanner 22, a memory buffer 24, a modem/digital signal processor (DSP) 26 and a telephone interface 28. Controlling the operation of the facsimile machine is a central processing unit (CPU) 30 that may have its own non-volatile memory 32 for storing commonly used telephone numbers, as well as a keypad 34 for entering commands or additional telephone numbers.

The facsimile machine 20 may be connected to a computer system 50. The computer system and the facsimile are connected via a communication link 52 that comprises a dedicated cable or by being connected to the same local or wide area network. Documents to be transmitted are sent from the computer system 50 to the facsimile machine 20 via the communication link 52. In addition, the user typically selects the telephone number of the intended recipient from a phone number database 54 that is maintained on the computer system.

In the case where a document is manually fed into the facsimile machine, the document to be transmitted is scanned by the optical scanner 22 where it is digitized and stored in the memory buffer 24. The telephone number of the intended recipient is entered using the keypad 34 or by selecting a number that was previously stored in the memory 32. The central processing unit 30 then instructs the DSP 26 to produce the appropriate DTMF tones or pulses so that the appropriate telephone number is dialed. The DSP 26 then reads the digital data stored in the memory buffer 24 and produces a modulated carrier signal that is fed through the telephone interface 28 to the public switched telephone network. The construction and operation of the facsimile machine 20 are considered to be well known to those of ordinary skill in the art and therefore will not be discussed in further detail except as related to the present invention.

In a conventional facsimile machine, when the data stored in the memory buffer 24 is being transmitted to a remote facsimile receiver, the DSP 26 is busy modulating a carrier signal and monitoring the telephone line for any handshaking signals that are sent from the receiver. However, before the data transmission commences, the DSP is relatively idle. In the present invention, this idle computing power of the DSP is utilized to detect and interpret the informational messages that indicate there is a problem with the number dialed.

As indicated above, if the telephone number of the intended recipient has been changed, the telephone service provider plays an informational message that begins with a series of alert tones and informs the caller that the telephone number has been changed. In the present invention, the DSP 26 is programmed to detect the alert tones and to interpret the informational message played.

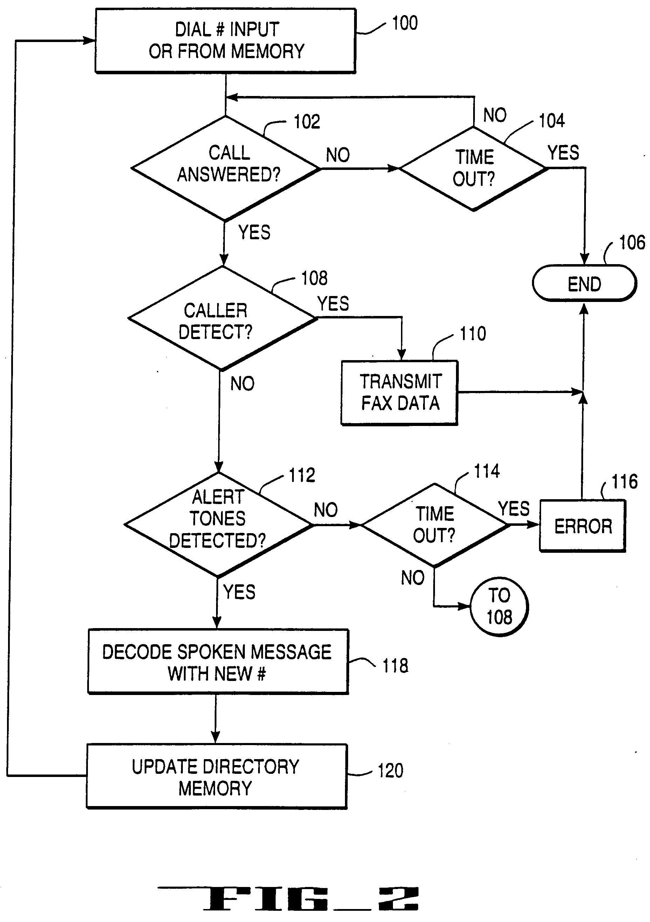

FIGURE 2 is a flowchart of the steps performed by the DSP that is programmed according to the present invention. Beginning with the step 100, the central processing unit instructs the DSP to dial a telephone number input by the user or recalled from either the memory 32 within the facsimile machine or the phone number database 54 of the computer system 50. At a step 102, the DSP determines whether the call has been answered. If not, processing proceeds to a step 104 wherein it is determined whether a tuner that monitors the length of tune since the telephone number was dialed has expired. If the time has not expired, processing returns to step 102 to wait for the call to be answered. If the timer has expired, processing ends at a step 106.

Once the DSP determines that the call has been answered, the DSP then determines whether a carrier tone or other signals that indicate that the remote facsimile machine is ready to receive data are detected at a step 108. If so, the data stored in the facsimile machine memory buffer is transmitted at a step 110 in the conventional fashion. If the carrier is not detected at step 108, then the DSP monitors the telephone line to determine if the alert tones have been transmitted. As indicated above, the alert tones are the sequence of known tones that precede an informational message played by the telephone service provider to indicate there is a problem placing the call. Because the alert tones have well-defined frequencies and durations, they can readily be detected by the DSP. If the alert tones are not detected, processing proceeds to a step 114, where it is determined whether a timer that monitors the length of time since the call was answered has timed out. If so, the central processing unit within the facsimile machine generates an error message at a step 116 that indicates there is a problem in the dialed telephone number and processing ends at step 106. If the timer at step 114 has not timed out, processing proceeds from step 114 to step 108 and the DSP again looks for the carrier signal on the telephone line.

If the alert tones are detected at step 112, then the DSP executes a voice recognition program at step 118 that translates the spoken words of the informational message. This message may inform the caller of a variety of problems with the call, including, for example, that the telephone number of the called party has been changed to a new number or that the user must dial a "1" before reaching this number, etc.

Any number of voice recognition programs can be used to translate the spoken words of the informational message. For example, the speech recognition algorithms described in U.S. Patent No. 4,799,262 could be used. In addition, because the vocabulary used in such messages is relatively limited and only a few voices are used to record such messages, the voice recognition programs can be easily optimized to translate the spoken words of the message into the text strings.

Once the informational message has been translated into one or more text strings, the strings are parsed for instructions in handling the call at a step 120. For example, to detect the situation where a telephone number has been changed, the text strings are parsed for the words "number", "changed", followed by a sequence of digits that differ from the digits of the telephone number that was dialed. Once a new telephone number has been detected, the new number can be updated in the facsimile machine's memory 32 or the phone number database 54 (shown in FIGURE 1). The new number can then be dialed and processing can continue in the manner described above using the new telephone number. Similarly, to detect a informational message that indicates that the user must dial a "1" before reaching the number dialed, the DSP parses the text strings for the words: "We're sorry, before reaching this number it is first necessary to dial a '1'." Once this message is detected, the memories can be updated to include the extra 1, and the number can be redialed correctly.

As can be seen from the above examples, the DSP therefore implements a parsing routine that analyzes the text of the informational message in order to determine how the call should be handled.

The present invention is not limited to facsimile machines, but could also be used in any computer controlled data communication system such as a modem that transmits and receives digital data. Upon detecting the alert tones and decoding the informational message, the information concerning the call (e.g., the phone number) can be updated and the call redialed, if desired.

Furthermore, the present invention can also be used in situations where it is inconvenient to write down the informational message. For example, it is often the situation that people using conventional or cellular telephones have both hands occupied and do not have ready access to a pencil and paper to make note of a changed number. A DSP that is programmed in accordance with the present invention can be added to a conventional or cellular telephone so that when the digital signal processor detects the alert tones, the informational message is decoded and acted upon. For example, informational messages indicating that a phone number has been changed are converted into text, parsed for a new number, which is stored in memory, and redialed without the user having to press additional keys on the telephone keypad.

## Claims

1. A data transmission system for transmitting data over a telecommunication link to a remote receiver, comprising:
a telephone interface coupled to the telecommunication link;
a modem/digital signal processor coupled to the telephone interface, the modem/digital signal processor being programmed to detect one or more alert tones that precede an informational message indicating that there is a problem with a telephone call placed to the remote receiver, the modem/digital signal processor being further programmed to analyze the informational message to determine how the telephone call should be handled; and
a central processor that directs the data transmission system to place another telephone call to the remote receiver in accordance with the informational message received.

2. The data transmission system of Claim 1, wherein the informational message indicates that a telephone number of the remote receiver has been changed and wherein the modem/digital signal processor is programmed to detect a new number for the remote receiver.

3. The data transmission system of Claim 2, wherein the data transmission system further comprises a memory in which a previous telephone number for the remote receiver is stored, the central processor updating the directory memory when a new telephone number for the remote receiver is detected.

4. The data transmission system of Claim 2, further comprising a computer system coupled to the data transmission system, the computer system further including a memory in which a plurality of telephone numbers are stored, the central processing unit forwarding the new telephone number to the computer system when a new number for the remote receiver is detected.

5. The data transmission system of Claim 1, wherein the informational message is audible and the modem/digital signal processor is programmed with a voice recognition program to decode the informational message.

6. The data transmission system of Claim 1, wherein the data transmitted is facsimile data.

7. The data transmission system of Claim 1, wherein the data transmitted is voice data.

8. The data transmission system of Claim 1, wherein the data transmitted is digital data.
